# FASCICULE DE BREVET EUROPEEN

(11) **EP 0 555 632 B1**
(45) Date de publication et mention de la délivrance du brevet: **15.11.1995**
(21) Numéro de dépôt: 93100142.4
(22) Date de dépôt: 07.01.1993
(51) Int. Cl.: B29C 73/30

(54) **Procédé de rénovation des flancs d'un pneumatique**
Verfahren zum Erneuern der Seiten eines Reifens
Method for renewing the side-walls of a tyre

(30) Priorité: 20.01.1992 FR 9200635
(43) Date de publication de la demande: 18.08.1993
(73) Titulaire: COMPAGNIE GENERALE DES ETABLISSEMENTS MICHELIN - MICHELIN & CIE, 63040 Clermont-Ferrand Cédex (FR)
(72) Inventeur: Billieres, Jean, F-63100 Clermont-Ferrand (FR)
(74) Mandataire: Devaux, Edmond-Yves

(56) Documents cités:
- FR-A- 1 200 046
- FR-A- 1 450 860
- FR-A- 2 079 554

## Description

La présente invention concerne un procédé de rénovation des flancs d'un pneumatique à armature de carcasse radiale et comportant une armature de sommet. Elle concerne en particulier un procédé de rénovation du flanc extérieur d'un pneumatique pour véhicules "Poids Lourds" roulant principalement en agglomération urbaine et sujet à des arrêts fréquents, tels que les autobus, ou cars, ou camions de livraisons et déménagements.

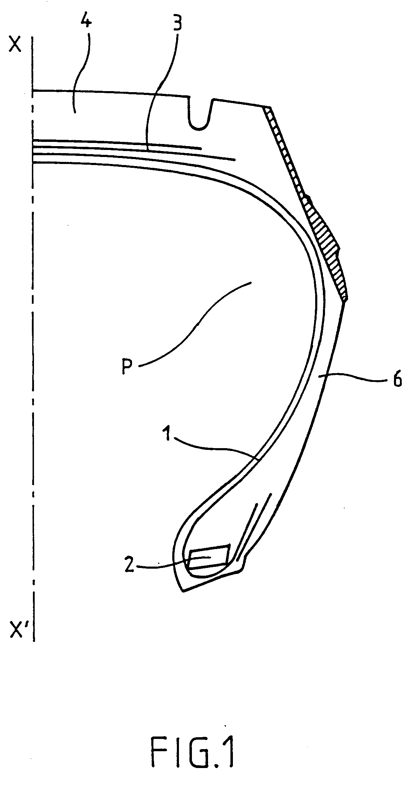

Ces pneumatiques, dits "urbains", du fait de leur utilisation sont sujets à une dégradation par usure très rapide de la partie supérieure de leurs flancs situés côté extérieur des véhicules, cette dégradation étant due au contact fréquent des flancs avec les trottoirs ; le phénomène observé est d'ailleurs dénommé usuellement "râpage trottoir". La figure 1 met en lumière le phénomène.

De manière générale, les pneumatiques concernés ne présentent pas des usures rapides de la bande de roulement. Il est alors fréquent que ces pneumatiques soient démontés alors que la bande de roulement n'est pas encore arrivée à mi-usure.

Les procédés usuels de rechapage de bande de roulement tiennent parfois compte de la nécessité de rénover les parties supérieures des flancs de pneumatique. Ils présentent cependant les inconvénients majeurs suivants : d'une part, comme leur nom l'indique, ils nécessitent le changement de la bande de roulement alors que, dans les cas étudiés, elle n'est pas encore usée ; d'autre part un procédé de rechapage de bande de roulement nécessite un matériel spécial, encombrant, onéreux et une main d'oeuvre qualifiée.

La présente invention a pour but de proposer un procédé de rénovation des flancs plus aisément mis en oeuvre par des personnes novices en la matière.

Conformément à l'invention, le procédé de rénovation des flancs d'un pneumatique à armature de carcasse radiale comportant une première étape de préparation des zones à rénover, une deuxième étape consistant dans l'apport de matière caoutchouteuse nouvelle à disposer sur les zones à rénover au moyen d'une gomme de liaison non vulcanisée, une troisième étape de vulcanisation de ladite gomme de liaison par des moyens permettant d'assurer la pression et de fournir la quantité de chaleur nécessaire, est caractérisé en ce que toutes les phases se réalisent sur le pneumatique monté sur véhicule et gonflé à sa pression de service, l'apport de matière se faisant par pavés ou blocs individuels de vulcanisat, en nombre égal à au moins 4 et disposés circonférentiellement sur le flanc à rénover situé sur le côté extérieur au véhicule.

Il est avantageux de poser les pavés de manière à créer entre eux des rainures, servant par la suite d'indicateurs d'usure.

Les pavés ou blocs individuels de caoutchouc ont préférentiellement une forme sensiblement équivalente à des troncs de pyramide ayant deux bases sous forme de quasi-parallélogrammes à arêtes arrondies, les surfaces de leurs bases, l'angle d'inclinaison de leurs quatre côtés, ainsi que leur épaisseur étant calculées en fonction de la dimension du pneumatique à rénover. Une des bases est la face de jonction avec la zone à rénover. Parmi les côtés, deux côtés d'un pavé servent avec les côtés des pavés adjacents à définir les rainures entre pavés. Les deux autres cotés, en forme d'arcs de cercle, sont parallèles à la circonférence du pneumatique.

De manière préférentielle et afin que la liaison entre pavés et flanc offre la meilleure résistance possible aux agressions futures de la part des trottoirs, les rainures sont inclinées par rapport aux rayons de l'ensemble pneumatique-jante d'un angle α, compris de manière avantageuse entre 10° et 45°.

Si l'on prend en compte le sens de rotation du pneumatique, l'angle α sera tel que le côté d'attaque du pavé ou bloc fasse avec le côté dudit pavé en arc de cercle et radialement à l'extérieur, un angle obtus égal à π/2 + α, le côté d'attaque du pavé étant le côté, formant une paroi de la rainure adjacente, entrant le premier dans la région de l'ellipse de contact.

Les pavés de caoutchouc utilisés sont vulcanisés dans des moules appropriés et pratiquement fabriqués en série. Ils sont peu encombrants et légers, ne nécessitant aucun matériel pour leur manutention et leur pose sur la gomme de liaison non vulcanisée et préalablement appliquée sur la zone du flanc à rénover.

En ce qui concerne l'appareillage nécessaire pour le maintien des pavés pendant la vulcanisation et pour la vulcanisation proprement dite, il se compose d'un vulcanisateur muni d'une plaque de cuisson à l'intérieur de laquelle se trouve un dispositif de chauffage électrique, prolongé par un bras de longueur variable, muni d'un ergot prenant appui sur la jante de montage du pneumatique, le vulcanisateur étant maintenu en pression sur le pavé à l'aide d'un serre-joint dont l'un des bras prend appui sur le flanc opposé au flanc à rénover.

L'invention sera mieux comprise à l'aide du dessin annexé à la description, illustrant un exemple non limitatif d'exécution, dessin sur lequel :
- la figure 1 représente la moitié d'une section transversale d'un pneumatique après roulage sur véhicule,
- la figure 2 représente partiellement une vue de face d'un flanc pourvu des pavés de caoutchouc vulcanisé,
- la figure 3 représente le pneumatique de la figure 1 après rénovation,
- la figure 4 représente schématiquement un appareillage susceptible d'être utilisé pour la vulcanisation.

Le pneumatique (P), de dimension 11 R 22.5 est muni d'une armature de carcasse (1) ancrée dans chaque bourrelet à une tringle (2) et surmontée radialement d'une armature de sommet (3), elle-même surmontée d'une bande de roulement (4). Les flancs (6) du pneumatique (P) ont un profil prenant en compte le profil d'équilibre de l'armature de carcasse (1) sous l'effet de la pression de gonflage ainsi que les épaisseurs de gomme recouvrant extérieurement cette armature. Après roulage, la partie supérieure (partie hachurée sur la figure 1) du flanc extérieur (6) est râpée, de manière à présenter, comme montrée, une surface plane inclinée par rapport à la trace XX' du plan équatorial du pneumatique. L'épaisseur de caoutchouc recouvrant l'armature de carcasse (1) devient alors faible, rendant cette dernière vulnérable et imposant la rénovation du flanc.

Le procédé de rénovation, conformément à l'invention, est appliqué au pneumatique (P) monté, gonflé et en position sur le véhicule qu'il équipe. Il est juste nécessaire de décoller la roue équipée du sol, de manière à ce qu'elle puisse tourner librement.

Comme pour tout procédé de rénovation, la première étape consiste à préparer les zones à rénover, ce qui est, dans le cas présent, devenu facile, cette préparation ayant été en grande partie réalisée par les trottoirs. Il convient simplement de rafraîchir les surfaces par le passage rapide d'une meule de taille modeste et portable manuellement, meule qu'il est facile de se procurer et d'utiliser.

La deuxième étape consiste à disposer sur le flanc extérieur du pneumatique (P) une couche de gomme de liaison non vulcanisée (10). Cette gomme de liaison peut se présenter sous forme d'une couche de gomme calandrée de faible épaisseur,ou alors sous forme d'une couche de dissolution que l'on étend sur la paroi du flanc.

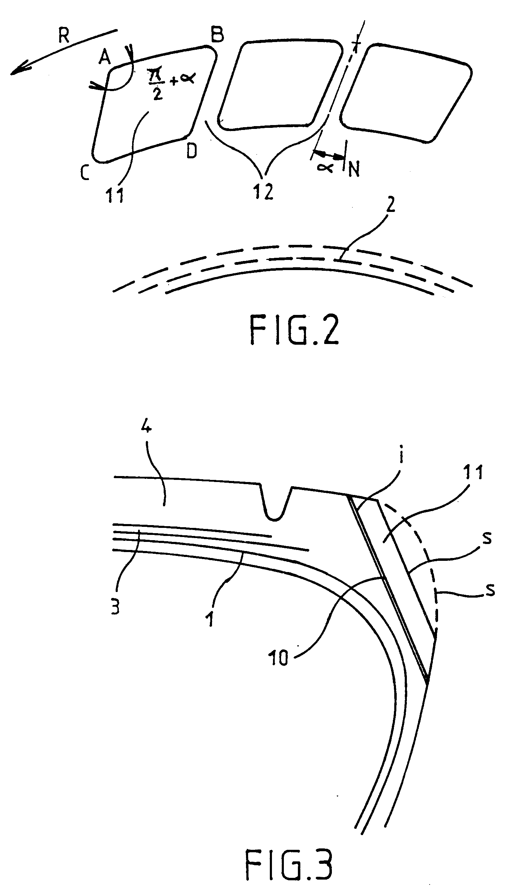

Préalablement, on aura délimité circonférentiellement la zone à rénover, zone pouvant être considérée comme une couronne circulaire, le cercle extérieur étant le cercle correspondant à l'extrémité axiale de la bande de roulement (4), le cercle intérieur étant tracé sur le flanc. La pose de la gomme de liaison (10) d'épaisseur 1 mm, ne présente aucune difficulté, après avivage de la zone à rénover au moyen d'un solvant couramment utilisé dans les procédés où l'on manipule du caoutchouc. Sur ladite gomme de liaison (10) sont alors posés (fig. 3) les pavés ou blocs (11) de caoutchouc, au nombre de 16 dans le cas présent, et dont les dimensions ont été préalablement établies de manière à laisser entre les pavés adjacents des rainures (12) (fig.2). Ces rainures (12) sont inclinées par rapport aux normales (N) à la bande de roulement (4), normales qui sont les rayons de la roue montée, d'un angle (α). Pour la dimension étudiée, les longueurs circonférentielles des arcs de cercle délimitant radialement à l'extérieur et à l'intérieur les pavés (11) sont respectivement égales à 184 mm et 155,5 mm, alors que la hauteur du pavé, différence entre les deux rayons des arcs de cercle circonférentiels, est égale à 123,5 mm, l'angle (α) étant égal à 20°et les rainures (12) présentant une largeur, mesurée dans le sens circonférentiel, égale à 20 mm. Sur la figure 2 est montrée la variante préférentielle selon laquelle l'inclinaison des rainures (12) entre pavés (11) est choisie en fonction du sens de rotation (R) du pneumatique. Les côtés (AC) et (BD) d'un pavé (11) définissent, avec les côtés des pavés adjacents, les rainures (12). Le pavé (11) comprend aussi deux autres côtés (AB) et (CD) en forme d'arcs de cercle, le côté AB étant le côté radialement à l'extérieur. Si (R) est le sens de rotation du pneumatique, l'angle formé par les côtés (AC) et (AB) est un angle obtus, le côté (AC) étant le côté d'attaque du pavé (11).

Comme montré sur la figure 3, il est évident que, vue en section transversale, la forme d'un pavé (11) pour flanc peut être variable, et en conséquence son épaisseur. La face supérieure (s) du pavé peut être parallèle à la face inférieure (i), correspondant à la zone préparée du flanc, ou alors bombée comme montrée en pointillés.

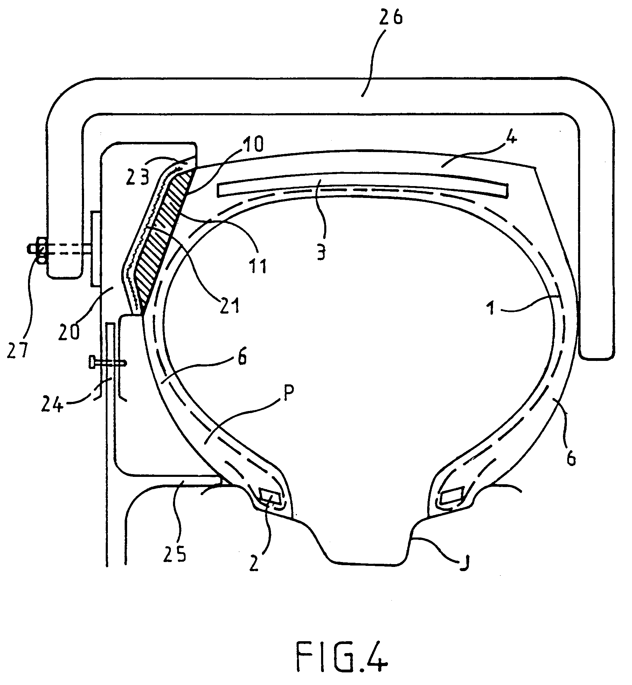

En ce qui concerne l'appareillage nécessaire pour la mise en place des pavés, et la rénovation proprement dite, il se compose, comme montré sur la figure 4, d'un vulcanisateur (20), muni d'une plaque (23) à l'intérieur de laquelle est renfermé un dispositif de chauffage électrique (21). On peut utiliser soit un dispositif alimenté en courant électrique par les batteries d'accumulateurs de bas voltage du véhicule, soit un dispositif alimenté par le réseau électrique normal à haut voltage. Ce dispositif de chauffage permet une vulcanisation à une température préférentielle comprise entre 60° et 120°C, étant entendu qu'une vulcanisation à froid est toujours réalisable. Le vulcanisateur (20) est prolongé par un bras (24), d'une part de longeur variable et d'autre part muni d'un ergot (25) destiné à prendre appui sur la jante (J), ce qui permet un centrage correct. Le vulcanisateur (20) est maintenu en place sur le pavé (11) à l'aide d'un simple serre-joint (26), dont l'un des bras prend appui sur le flanc opposé au flanc extérieur à rénover, l'autre bras étant pourvu de moyens de serrage (27) tel qu'un vis de serrage, de manière à appliquer parfaitement la plaque (23) sur le pavé (11).

Il est évident que les plaques (23) sont interchangeables, en fonction de la dimension du pneumatique à traiter et des dimensions des pavés utilisés.

L'appareillage ainsi décrit, peu encombrant, léger et facilement manipulable par une personne humaine normalement constituée, peu onéreux permet une rénovation facile sans démontage du pneumatique à rénover, une rénovation à la portée de tous.

## Revendications

1. Procédé de rénovation des flancs (6) d'un pneumatique (P) à armature de carcasse radiale (1), comportant une première étape de préparation des zones à rénover, une deuxième étape consistant dans l'apport de matière caoutchouteuse, à disposer sur les zones à rénover au moyen d'une gomme de liaison (10) non vulcanisée, une troisième étape consistant à vulcaniser ladite gomme de liaison (10), caractérisé en ce que toutes les étapes se réalisent sur le pneumatique monté sur véhicule et gonflé à sa pression de service, l'apport de matière se faisant par pavés ou blocs (11) de caoutchouc vulcanisé, en nombre égal à au moins 4 et disposés circonférentiellement sur le flanc (6) à rénover situé du côté extérieur véhicule.

2. Procédé selon la revendication 1, caractérisé en ce que les pavés sont posés de manière à créer entre eux des rainures (12).

3. Procédé selon la revendication 2, caractérisé en ce que les rainures (12) sont inclinées par rapport aux rayons de l'ensemble pneumatique (P) - jante (J) d'un angle (α) compris entre 10° et 45°.

4. Appareillage nécessaire à la mise en oeuvre selon l'une des revendications 1 à 3, comportant un vulcanisateur (20) muni d'une plaque de cuisson (23) à l'intérieur de laquelle se trouve un dispositif de chauffage électrique (21), vulcanisateur prolongé par un bras (24) de longueur variable et muni d'un ergot (25), prenant appui sur la jante de montage (J) du pneumatique (P), et maintenu en pression sur le pavé (11) par l'intermédiaire d'un serre-joint (26) dont l'un des bras prend appui sur le flanc (6) opposé au flanc (6) à rénover.

## Claims

1. A method for renovating the sidewalls (6) of a tyre (P) having radial carcass reinforcement (1), comprising a first step of preparing the zones to be renovated, a second step of adding rubber material to be arranged on the zones to be renovated by means of a non-vulcanised connecting rubber (10), and a third step of vulcanising said connecting rubber (10),
characterised in that all the steps are carried out on the tyre while it is mounted on the vehicle and inflated to its operating pressure, the addition of material being effected by at least 4 individual blocks (11) of vulcanised rubber, arranged circumferentially on the sidewall (6) to be renovated, located on the outside of the vehicle.

2. A method according to Claim 1, characterised in that the blocks are positioned in such a manner as to provide grooves (12) between them.

3. A method according to Claim 2, characterised in that the grooves (12) are inclined with respect to the radii of the assembly consisting of tyre (P) and rim (J) by an angle (α) of between 10° and 45°.

4. An apparatus for carrying out the method of one of Claims 1 to 3, comprising a vulcaniser (20) provided with a heating plate (23) within which there is contained an electric heating device (21), which vulcaniser is extended by an arm (24) of variable length, provided with a flange (25) which rests against the mounting rim (J) of the tyre (P), and kept pressed against the block (11) by means of a screw clamp (26), one of the arms of which rests against the sidewall (6) opposite the sidewall (6) to be renovated.

## Patentansprüche

1. Verfahren zum Erneuern der Flanken (6) eines Luftreifens (P) mit radialer Karkassenbewehrung, mit einem ersten Schritt des Vorbereitens der zu erneuernden Abschnitte, einem zweiten Schritt, in dem an den zu erneuernden Abschnitten anzubringende Kautschukmasse mit Hilfe eines nichtvulkanisierten Verbindungsgummis (10) aufgetragen wird, und einem dritten Schritt des Vulkanisierens des Verbindungsgummis (10),
dadurch gekennzeichnet,
daß alle Schritte an dem am Fahrzeug montierten und auf Arbeitsdruck aufgepumpten Reifen durchgeführt werden, und daß der Materialauftrag in Form von Blöcken (11) aus vulkanisiertem Kautschuk vorgenommen wird, deren Zahl wenigstens 4 beträgt und die in Umfangsrichtung an der an der Außenseite des Fahrzeugs liegenden, zu erneuernden Flanke (6) angeordnet werden.

2. Verfahren nach Anspruch 1, dadurch gekennzeichnet, daß die Blöcke so angeordnet werden, daß zwischen ihnen Rillen (12) entstehen.

3. Verfahren nach Anspruch 2, dadurch gekennzeichnet, daß die Rillen (12) gegen die Radien der Reifen (P)-Felge (J)-Einheit unter einem Winkel (α) von zwischen 10° und 45° geneigt sind.

4. Vorrichtung für die Durchführung des Verfahrens nach einem der Ansprüche 1 bis 3, die einen Vulkanisator (20) umfaßt, der mit einer Heizplatte (23) versehen ist, in der eine elektrische Heizvorrichtung (21) angebracht ist, und der durch einen Arm (24) mit veränderbarer Länge verlängert ist, der mit einem Zapfen (25) versehen ist, der auf die Montagefelge (J) des Luftreifens (P) drückt, wobei der Vulkanisator mit Hilfe einer Zwinge (26), von der ein Arm auf die der zu erneuernden Flanke (6) gegenüberliegende Flanke (6) drückt, auf dem Block (11) angedrückt gehalten wird.
